# EUROPEAN PATENT SPECIFICATION

(11) **EP 0 364 055 B1**
(45) Date of publication and mention of the grant of the patent: **19.05.1993**
(21) Application number: 89202576.8
(22) Date of filing: 11.10.1989
(51) Int. Cl.: B09B 1/00

(54) **Waste dump comprising a storage space with impermeable wall of material with pozzolanic properties**
Mülldeponie mit einem Lagerraum, versehen mit einer undurchlässigen Wand aus einem Material mit puzzolanischen Eigenschaften
Dépôt de déchets comprenant un espace de stockage à paroi imperméable en matière à propriétés pouzzolaniques

(30) Priority: 12.10.1988 NL 8802507
(43) Date of publication of application: 18.04.1990
(73) Proprietor: PELT & HOOYKAAS B.V., 3087 AA Rotterdam (NL)
(72) Inventor: Hooykaas, Carel Willem Jan, NL-3062 BT Rotterdam (NL)
(74) Representative: van der Veken, Johannes Adriaan

(56) References cited:
- EP-A- 0 148 430
- EP-A- 0 157 749
- EP-A- 0 274 564
- AT-B- 385 215

## Description

The invention relates to a waste dump comprising an at least partially underground storage container with a water, impermeable wall, comprising a self-restoring layer when cracks occur. Such a waste dump is known from EP-A-0 274 564.

Under current legislation, chemical waste may be stored only if specific criteria established by the authorities are met.

For this reason the storage of chemical waste is permitted only at waste dumps comprising an at least partially underground tank with impermeable walls, in particular a tank made of Portland cement.

A disadvantage of such a waste dump is that in the event of deformation of the ground underneath there is a possibility of the concrete tank cracking, as a result of which waste materials could escape from the tank, particularly if there is excessive moisture possibly in a waste material present in the tank.

The repair of such a concrete tank is virtually impossible. This disadvantage is even more strongly felt because of the fact that concrete has a service life of about 50 years.

Efforts have been made to eliminate the above-mentioned disadvantage by making use of waste dumps provided with impermeable deformable walls made of plastic sheeting material or certain non wovens, and using a drainage system to drain away liquid collecting on the bottom of the waste dump. The problem is that the sheeting or non wovens used tear after a relatively short time, while the drainage system also no longer works after a few years. This is a particular problem, since the service life of such waste dumps is between 20 and 40 years.

It is clear that on account of the above-mentioned circumstances such a waste dump has to be checked constantly, which is expensive.

Storing waste in salt pits has also been considered, but here one is dependent on natural conditions.

In order to prevent the penetration of water into such a waste dump from the outside, it has also been proposed that the waste dump should be covered with a tight covering layer, such as a layer of asphalt or a bentonite clay mixture, with or without a non woven underneath.

Since cracking is not ruled out here either, such covering layers also require constant checks.

More recently it has been proposed in the above-mentioned EP-A-0 274 564 to use for a waste dump a wall consisting of two foil layers with fine bentonite powder therebetween. If a crack would be formed in the foil layers this crack will be closed by the bentonite.

However, it is difficult to install such a wall due to its flexibility and closing of cracks requires a rather long time in which period noxious waste materials may penetrate from the waste dump into the surrounding ground water.

The object of the invention is now to provide a waste dump in which the above-mentioned disadventages no longer occur, and in particular in which the risk of permeability of a wall of a waste dump through cracking is considerably reduced.

This object is achieved according to the invention in that the rigid layer of the container of hydraulically set material still contains hydraulically settable material in the form of ground granulated blast furnace slag.

Through the pozzolanic properties of ground blast furnace slag in the event of cracking occuring, the ground blast furnace slag still possessing pozzolanic properties will react under the influence of water, forming a new hydraulically set mass which immediately completely seals the crack which has formed.
When such a material is used the requirement of a virtually impermeable rigid wall which even after the passage of time does not show any permeable crack can be met, since said cracks are immediately sealed through the self-restoring capacity provided by a ground granulated blast furnace slag.

This gives the great advantage that even if unexpected cracking were to occur in a tank with impermeable rigid wall, this cracking would not lead to environmental pollution in the vicinity of the tank, since the crack formed closes by itself again.

In addition to crack-restoring properties of this ground granulated blast furnace slag has the advantage that on contact with water they give it a high pH, which contributes to the rapid sealing of the crack through reaction of the ground granulated blast furnace slag and, on the other hand, there is a great reduction in the leaching of harmful substances from the waste present in the waste dump.

In a preferred embodiment of the waste dump of the invention the rigid layer being self-restoring when cracks form also forms a covering layer for the storage container.

The invention also comprises a formed container and/or covering layer with a water-impermeable wall comprising a layer which is selfrestoring on the formation of cracks being suitable for use in a waste dump according to the invention being characterized in that a rigid layer of the container hydraulically set material still contains hydraulically settable material in the form of ground granulated blast furnace slag.

The invention will now be eplained by an example of an embodiment with reference to the drawing, in which:
Fig. 1 shows a waste dump with a tank with impermeable wall and covering layer according to the invention;
Fig. 2 is a cross-section of such a tank with a crack present therein; and
Fig. 3 is the same tank as that of Fig. 2, in which the crack is sealed by the self-restoring properties of the material of the wall of the tank and covering layer.

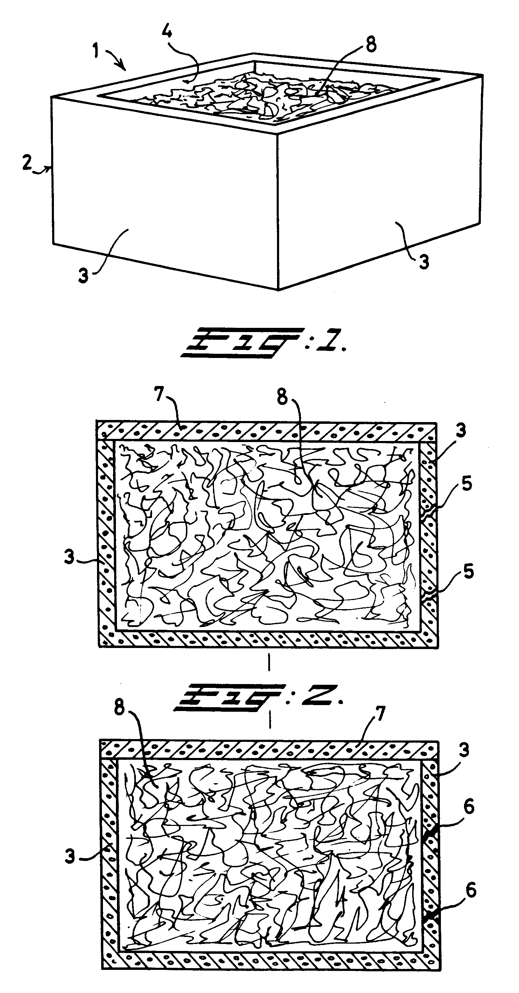

Fig. 1 shows a waste dump 1, comprising a storage space for waste in the form of a tank 2 with impermeable rigid concrete wall 3 which contains waste 8.

The wall 3 of the tank 2 has a rigid layer 4 formed by ground granulated blast furnace slag mixed with fine or coarse blast furnace granulate. The ground granulated blast furnace slag can be partially replaced by ground fly ash, while the coarse of fine blast furnace granulate can also be gravel.

It goes without saying that the wall 3 and the layer 4 can be integral and be made of the material of layer 4.

For setting, 2% Portland cement or another subtance which promotes setting can be added to the ground granulated blast furnace slag.

Fig. 2 shows that a crack 5 can form in an impermeable rigid wall 3 of a tank 2 of set ground granulated blast furnace slag mixed with coarse and fine blast furnace slag granulate. As can be seen in Fig. 3, through reaction of not yet set ground granulated blast furnace slag with water penetrating from the environment or through liquid present in the tank, the crack 5 can be closed with hardened material 6 formed from this not yet set ground blast furnace slag.

In order to prevent the penetration of rainwater into the tank 2 with waste 8, it can be closed by a cover 7 of the same material as layer 4, as a result of which, in the event of ground settling, such cracks close by themselves.

## Claims

1. Waste dump comprising an at least partially underground storage container with a water impermeable wall, comprising a self-restoring layer when cracks occur, **characterized in that** the rigid layer of hydraulically set material still contains hydraulically settable material in the form of ground granulated blast furnace slag.

2. Waste dump according to claim 1, **characterized in that** the rigid layer being self-restoring when cracks form also forms a covering layer for the storage container.

3. Formed container and/or covering layer with a water-impermeable wall comprising a layer which is self-restoring on the formation of cracks being suitable for use in a waste dump according to claims 1 or 2, **characterized in that** the rigid layer of hydraulically set material still contains hydraulically settable material in the form of ground granulated blast furnace slag.

## Patentansprüche

1. Mülldeponie, die einen zumindest teilweisen unterirdischen Speicherbehälter mit einer wasserundurchlässigen Wand besitzt, mit einer sich selbst reparierenden Schicht, falls Risse auftreten, dadurch gekennzeichnet, daß die starre Schicht aus hydraulisch abgebundenem Material immer noch hydraulisch abbindbares Material in Form von gemahlenem Schlackensand enthält.

2. Mülldeponie nach Anspruch 1, dadurch gekennzeichnet, daß die starre Schicht, die sich bei Rissebildung selbst repariert, auch eine Deckschicht für den Speicherbehälter bildet.

3. Geformter Behälter und/oder Deckschicht mit einer wasserundurchlässigen Wand mit einer Schicht, die sich bei Rissebildung selbst repariert und die geeignet ist zur Verwendung in einer Mülldeponie nach Anspruch 1 oder 2, dadurch gekennzeichnet, daß die starre Schicht aus hydraulisch abgebundenem Material immer noch hydraulisch abbindbares Material in der Form von gemahlenem Schlackensand enthält.

## Revendications

1. Dépôt de déchets comprenant une enceinte de stockage au moins partiellement souterraine avec une paroi imperméable à l'eau, comprenant une couche qui s'auto-répare lorsqu'il apparaît des fissures, **caractérisé en ce que** la couche rigide de matière durcie hydrauliquement contient encore de la matière durcissable hydrauliquement sous forme de sable de laitier de haut fourneau broyé.

2. Dépôt de déchets selon la revendication 1, **caractérisé en ce que** la couche rigide qui s'auto-répare lorsqu'il se forme des fissures forme aussi une couche de couverture pour l'enceinte de stockage.

3. Enceinte ouvrée et/ou couche de couverture avec une paroi imperméable à l'eau comprenant une couche qui est auto-réparatrice lors de la formation de fissures, se prêtant à être utilisée dans un dépôt de déchets selon la revendication 1 ou 2, **caractérisée en ce que** la couche rigide de matière durcie hydrauliquement renferme encore de la matière durcissable hydrauliquement sous forme de sable de laitier de haut fourneau broyé.
